Europäisches Patentamt

European Patent Office

Office européen des brevets

(19)

(11) Veröffentlichungsnummer: **0 224 848 B1**

(12) **EUROPÄISCHE PATENTSCHRIFT**

(45) Veröffentlichungstag der Patentschrift: **27.05.92**

(21) Anmeldenummer: **86116336.8**

(22) Anmeldetag: **25.11.86**

(51) Int. Cl.⁵: **C09J 175/04**, C08G 18/80, C08J 5/12

(54) **Verfahren zur Herstellung von Verklebungen.**

(30) Priorität: **06.12.85 DE 3543120**

(43) Veröffentlichungstag der Anmeldung:
**10.06.87 Patentblatt 87/24**

(45) Bekanntmachung des Hinweises auf die
Patenterteilung:
**27.05.92 Patentblatt 92/22**

(84) Benannte Vertragsstaaten:
**BE DE ES FR GB IT SE**

(56) Entgegenhaltungen:
**EP-A- 0 023 023**
**EP-A- 0 145 999**
**DE-A- 2 317 161**
**DE-A- 2 719 720**
**DE-A- 2 906 136**

**MAKROMOLEKULARE CHEMIE, Band 185, Nr.
2, Basel 1984, Seiten 281-295; L.T. PHAI et al.:
"Systèmes réactifs polyuréthannes bloqués,1"**

(73) Patentinhaber: **BAYER AG**

**W-5090 Leverkusen 1 Bayerwerk(DE)**

(72) Erfinder: **König, Eberhard, Dr.**
**Flörsheimer Strasse 4**
**W-6093 Flörsheim(DE)**
Erfinder: **Zöllner, Robert, Dr.**
**Henrich-von-Kleist-Strasse 10**
**W-5090 Leverkusen(DE)**
Erfinder: **Gronemeier, Uwe Fritz**
**Enkeln 17**
**W-5067 Kürten(DE)**

**Beschreibung**

Die Erfindung betrifft ein neues Verfahren zur Herstellung von Verklebungen beliebiger Substrate mittels eines thermoplastischen, hitzevernetzbaren Klebstoffs auf Polyurethanbasis, insbesondere von PVC-Folien mit Polyurethan-Hartschaumplatten.

Automobilinnenverkleidung, beispielsweise Türseitenteile oder einbaufertige Autohimmel, werden nach einem neueren Verfahren aus warmverformten Polyurethan-Harschaumplatten gefertigt. Bei diesem Verfahren ist es zweckmäßig, die Dekorfolie, häufig eine PVC-Folie, gleichzeitig während des Preßvorganges mit der erwärmten Schaumstoffplatte in der entsprechenden Form zu verkleben.

Für diese Klebstoffanwendung können lösungsmittelfreie Reaktivklebstoffe, z.B. auf Polyurethanbasis, eingesetzt werden. Nachteilig ist hierbei allerdings, daß die Topfzeit des Klebstoffes den Verarbeitungsrhythmus bestimmt.

Außerdem bereitet die Handhabung der nassen, mit Klebstoff versehenen Teile Schwierigkeiten.

Eine Methode, die die eben genannten Schwierigkeiten umgeht, wird in der DE-PS 2 701 431 beschrieben. Hierbei werden Verklebungen mittels einer Schmelzklebstoffolie, bestehend aus bestimmten Polyamid-Mischpolymerisaten, durchgeführt. Ein Nachteil dieses Schmelzklebstoffes besteht darin, daß für wärmebeständige Verklebungen Polymerisat-Kombinationen mit hoher Erweichungstemperatur ausgewählt werden müssen Die Verklebung mit derartigen Polymerisaten erfordert eine nachhaltige Erwärmung der zu verklebenden Teile bei relativ hohen Temperaturen, die im Falle von Thermoplasten, z.B. PVC, nicht ohne weiteres angewandt werden können Außerdem ist der Wärmebeständigkeitstest dieser Verklebungen, wie aus den angeführten Beispielen hervorgeht, auf 80°C begrenzt, wohingegen heute von der Automobilindustrie Wärmebeständigkeiten bis zu 110°C und höher verlangt werden.

Es war daher die der Erfindung zugrunde liegende Aufgabe, einen neuen Klebstoff zur Verfügung zu stellen, der den Folgenden Anforderungen genügt:

- Der Klebstoff sollte nach bekannten Methoden aus den üblichen Ausgangsmaterialien, wie sie bislang zur Herstellung von Polyurethanklebstoffen eingesetzt werden, herstellbar sein.
- Der Klebstoff sollte die Herstellung von flächigen Verklebungen einer hohen thermischen Beständigkeit ermöglichen.
- Der Klebstoff sollte lösungsmittelfrei, herstell- und verwendbar sein, wobei die Verarbeitbarkeit des Klebstoffs nach seiner Herstellung mindestens 10 Tage gewährleistet sein muß.

Die Aufgabe konnte mit dem nachstehend näher beschriebenen erfindungsgemäßen Verfahren gelöst werden.

Aus der DE-A 2 906 136 sind Schmelzklebstoffe auf Polyurethanbasis bekannt. Die oben beschriebene, der Erfindung zugrunde liegende Aufgabe und die anschließend beschriebene erfindungsgemäße Lösung wird jedoch hierin weder vorbeschrieben noch nahegelegt.

Ferner war aus der DE-A 2 317 161 bekannt, Polyisocyanat, Oxim und Polyol gleichzeitig miteinander umzusetzen und die so erhaltenen blockierten Zwischenprodukte bei höherer Temperatur auszuhärten und sie als Klebstoffe zu verwenden. Das anschließend beschriebene erfindungsgemäße Verfahren, wonach ein Polyurethan-Reaktionsgemisch aus näher definierten Komponenten auf eine Substratoberfläche gebracht und dort umgesetzt wird, geht indessen aus dieser Veröffentlichung weder hervor noch legt sie ein solches Verfahren nahe.

Gegenstand der Erfindung ist ein Verfahren zur Herstellung von Verklebungen beliebiger Substrate mittels eines Klebstoffes auf Polyurethanbasis, dadurch gekennzeichnet, daß man mindestens eine der miteinander zu verklebenden Substratoberflächen mit einem Polyurethan-Reaktionsgemisch, bestehend aus den Komponenten

a) flüssigen Gemischen von 2,4'- und 4,4'-Diisocyanatodiphenylmethan, durch partielle Carbodiimidisierung oder Urethanisierung der Isocyanatgruppen verflüssigtes 4,4'-Diisocyanatodiphenylmethan oder bei Raumtemperatur flüssigen Phosgenierungsprodukten von Anilin/Formaldehyd-Kondensaten, die neben 4,4'-und 2,4'- und gegebenenfalls 2,2'-Diisocyanato-diphenylmethan höhere Homologe dieser Diisocyanate enthalten,

und

b) einer Polyolkomponente, enthaltend

b1) mindestens eine organische Polyhydroxylverbindung mit einer Hydroxylzahl von 50 - 400,

b2) mindestens eine, eine Ketoximgruppe aufweisende organische Verbindung in einer Menge von 1 - 30 Gew.-%, bezogen auf das Gesamtgewicht der Komponente b),

und gegebenenfalls

b3) mindestens eine organische Polyhydroxylverbindung einer über 400 liegenden Hydroxylzahl in einer Menge von 0 - 100 Hydroxyläquivalent-%, bezogen auf die Komponente b1)

wobei

ein Äquivalentverhältnis der Isocyanatgruppen der Komponente a) zu allen in der Komponente b) vorliegenden, gegenüber Isocyanatgruppen reaktionsfähigen Gruppen von 1:1 - 1,8:1 eingehalten wird,

c) aus der Polyurethanchemie und/oder der Klebstofftechnologie üblichen Hilfs- und Zusatzmitteln,

beschichtet und dann die miteinander zu verklebenden Substratoberflächen bei einer Temperatur innerhalb des Temperaturbereichs von 100 bis 200°C gegebenenfalls unter Anwendung von Druck miteinander in Kontakt bringt.

Erfindungsgemäß bevorzugt ist

- daß man als Komponente b3) Acetonoxim, Butanonoxim, Diethylketoxim, Cyclohexanonoxim, Acetophenonoxim oder Benzophenonoxim verwendet,

- daß man vor dem Zusammenbringen der miteinander zu verklebenden Substrate die aus dem Reaktionsgemisch der Komponenten a), b) und gegebenenfalls c) bestehende Beschichtung der Substratoberfläche(n) innerhalb des Temperaturbereiches von 10 - 100°C zu einer thermoplastischen, nicht vernetzten Klebstoffschicht ausreagieren läßt und die Vereinigung der miteinander zu verklebenden Substrate erst im Anschluß hieran, gegebenenfalls nach Zwischenlagerung der mit der thermoplastischen Klebstoffschicht versehenen Substrate vornimmt,

- daß man eine Substratoberfläche A mit dem zu einem Polyurethan ausreagierenden Reaktionsgemisch aus den Komponenten a), b) und gegebenenfalls c) beschichtet, die Beschichtung bei 10 - 100°C zu einem thermoplastischen Polyurethan ausreagieren läßt und anschließend, gegebenenfalls nach Zwischenlagerung des so beschichteten Substrats A dieses klebstoffseitig mit der Oberfläche eines Substrats B, welches zumindest an dieser Oberfläche eine Temperatur von 130 bis 180°C aufweist, gegebenenfalls unter Anwendung von äußerem Druck, vereinigt, und

- daß man als Substrat A eine Kunststoff-, vorzugsweise PVC-Folie und als Substrat B einen Polyurethanhartschaumstoff, vorzugsweise eine Polyurethan-Hartschaumstoff-Platte, verwendet.

Die Herstellung der erfindungsgemäßen, thermoplastischen, hitzevernetzbaren Klebstoffe erfolgt durch Umsetzung von a) einer Polyisocyanatkomponente mit b) einer Polyolkomponente, gegebenenfalls unter Mitverwendung von c) üblichen Hilfs- und Zusatzmitteln.

Als Polyisocyanatkomponente a) werden flüssige Gemische von 2,4'-und 4,4'-Diisocyanatodiphenylmethan, durch partielle Carbodiimidisierung oder Urethanisierung der Isocyanatgruppen verlüssigtes 4,4'-Diisocyanatodiphenylmethan und insbesondere bei Raumtemperatur flüssige Phosgenierungsprodukte von Anilin/Formaldehyd-Kondensaten, die neben 4,4'- und 2,4'-und gegebenenfalls 2,2'-Diisocyanatodiphenylmethan höhere Homologe dieser Diisocyanate enthalten, verwendet. Vorzugsweise weisen die besonders gut geeigneten Polyisocyanatgemische der Diphenylmethanreihe bei 25°C eine Viskosität von ca. 20-250, insbesondere von ca. 30-150 mPas auf.

Bei der Polyolkomponente b) handelt es sich um ein Gemisch aus b1) organischen Polyhydroxylverbindungen der aus der Polyurethanchemie an sich bekannten Art einer zwischen 50 und 400 liegenden Hydroxylzahl, b2) 0 - 100 Hydroxyläquivalent-%, vorzugsweise 10 bis 30 Hydroxyläquivalent-%, bezogen auf die Komponente b1) an aus der Polyurethanchemie an sich bekannten Polyhydroxylverbindung einer über 400 liegenden Hydroxylzahl und b3) beliebigen, mindestens eine Ketoximgruppe aufweisenden organischen Verbindungen, die von der Ketoximgruppe abgesehen, gegenüber Isocyanatgruppen inert sind.

Als Komponente b1) werden vorzugsweise die aus der Polyurethanchemie an sich bekannten Polyester- oder Polyetherpolyole bzw. deren Gemische eingesetzt.

Als Polyesterpolyole kommen insbesondere lineare Polyesterdiole oder auch schwach verzweigte Polyesterpolyole des Hydroxylzahlbereichs 50 - 400, vorzugsweise 100 - 250 in Betracht, wie sie in an sich bekannter Weise aus Dicarbonsäuren, wie z.B. Adipinsäure, Phthalsäure, Hexahydrophthalsäure und mehrwertigen, insbesondere zweiwertigen Alkoholen, wie z.B. Ethylenglykol, Diethylenglykol, 1,4-Butandiol, Neopentylglykol, 1,6-Hexandiol oder deren Gemische, gegebenenfalls unter Mitverwendung geringer Mengen an höherfunktionellen Polyolen, wie Trimethylolpropan oder Glyzerin hergestellt werden können. Auch Polyesterpolyole auf Basis von höherwertigen Alkoholen wie Trimethylolpropan oder Glycerin, zweibasischen Säuren wie Phthalsäure und Adipinsäure und monofunktionellen Fett- oder Ölsäuren wie z.B. Stearinsäure oder Ölsäure sind prinzipiell geeignet, sofern sie den genannten Bedingungen bezüglich der Hydroxylzahl entsprechen. Die Polyesterpolyole, die erfindungsgemäß als Komponente b1) oder als Teil der Komponente b1) in Betracht kommen, weisen im allgemeinen bei 25°C eine Viskosität von 4000 - 40000, vorzugsweise von 4000 -10000 mPas auf.

Geeignete Polyetherpolyole sind insbesondere solche einer Hydroxylfunktionalität von 2-4 und einer Hydroxylzahl von 50 - 400 vorzugsweise 100 - 250. Es handelt sich hierbei um die aus der Polyurethanchemie bekannten Polyetherpolyole, wie sie durch Alkoxylierung unter Verwendung von Propylenoxid und/oder Ethylenoxid von geeigneten Startermolekülen erhalten werden können. Geeignete Startermoleküle sind besipielsweise Wasser, Ethylenglykol, Propylenglykol, Glyzerin, Trimethylolpropan, N-Methyamin, N-Ethylamin, Triethanolamin, Ethylendiamin oder beliebige Gemische derartiger Startermoleküle. Besonders gut geeignet sind die entsprechenden Alkoxylierungsprodukte von Aminstickstoff aufweisenden Startermolekülen.

Besonders bevorzugt besteht die Komponente b1) aus Gemischen von Polyesterpolyolen und von Polyetherpolyolen der jeweils beispielhaft genannten Art im Gewichtsverhältnis Polyester:Polyether = 5:1 - 1 :1.

Bei der gegebenenfalls mitzuverwendenden Komponente b2), die in Mengen von 0 - 100, vorzugsweise 10 bis 30 Hydroxyläquivalent-%, bezogen auf die Komponente b1), mitverwendet wird, handelt es sich um mehrwertige Alkohole einer über 400 liegenden Hydoxylzahl, insbesondere um solche mit einer Hydroxylfunktionalität von 2 - 4, bzw. um beliebige Gemische derartiger, mehrwertiger Alkohole. In Betracht kommen sowohl einfache mehrwertige Alkohole der oben als Startmoleküle für die Polyetherpolyole beispielhaft genannten Art als auch, den gemachten Angaben bezüglich der Hydroxylzahl entsprechend, um vergleichsweise niedermolekulare Alkoxylierungsprodukte der oben beispielhaft genanten Startermoleküle.

Bei der Komponente b3), handelt es sich um beliebige, mindestens eine Ketoximgruppe aufweisende, ansonsten jedoch gegenüber Isocyanatgruppen inerte organische Verbindungen.

Vorzugsweise werden die einfachen Ketoxime, wie sie durch Umsetzung von Hydroxylamin mit einfachen Ketonen erhalten werden, verwendet. Beliebige Gemische derartiger Ketoxime können selbstverständlich ebenfalls zum Einsatz gelangen. Typische Beispiele geeigneter Ketoxime sind Acetonoxim, Butanonoxim, Diethylketoxim, Cyclohexanonoxim, Acetophenonoxim und Benzophenonoxim. Besonders bevorzugt wird Butanonoxim als Komponente b3) eingesetzt. Die Komponente b3) kommt, bezogen auf das Gesamtgewicht der Komponente b) in einer Menge von 1 - 30 vorzugsweise 5 -20 Gew,-% zum Einsatz.

Geeignete, gegebenenfalls mitzuverwendende Hilfs- und Zusatzmittel c) sind beispielsweise bekannte Katalysatoren für die Isocyanat-Polyadditionsreaktion wie beispielsweise tertiäre Amine, wie N,N-Dimethylbenzylamin, N,N-Dimethylethanolamin, Lactame wie C-Caprolactam, basische anorganische Salze wie Kaliumacetat oder organische Zinnverbindungen wie Dibutyl-zinn-dilaurat oder Zinn(II)-octoat. Weitere, gegebenenfalls mitzuverwendende Hilfs-und Zusatzmittel c) sind beispielsweise klebrigmachende Harze der an sich bekannten Art. Im allgemeinen ist die Mitverwendung von derartigen klebrigmachenden Harzen jedoch nicht erforderlich.

Zur Durchführung des erfindungsgemäßen Verfahrens werden die Komponenten a), b) und gegebenenfalls c) aufgetragen und in solchen Mengen zur Umsetzung gebracht, daß das Äquivalentverhältnis von Isocyanatgruppen der Komponente a) zu Hydroxylgruppen der Komponente b) (inklusive den Hyxdroxylgruppen der Oxime) bei 1:1 bis 1,8:1, vorzugsweise 1:1 bis 1,3:1 liegt. Die genannten Reaktionspartner werden nach ihrer Durchmischung innerhalb des Temperaturbereichs von 10 bis 100, vorzugsweise 20 bis 90°C zu einem thermoplastischen, hitzevernetzbaren Klebstoff umgesetzt. Vorzugsweise erfolgt dies dergestalt, daß man mit Hilfe einer Zweikomponenten-Spritzanlage die Komponente a) einerseits und die Komponenten b) und c) andererseits auf mindestens eine der miteinander zu verklebenden Substratoberfläche unter Ausbildung einer Schicht mit einer Schichtdicke von 100 bis 500 $\mu$m aufsprüht und anschließend beispielsweise in einem Trockenkanal zu einem thermoplastischen Klebstoff-Film ausreagieren läßt. Derartige, mit einer thermoplastischen Klebstoff versehene Substratoberfläche können dann anschließend mit einer zweiten, gegebenenfalls ebenfalls mit einer Klebstoffschicht der genannten Art beschichteten Substratoberfläche kombiniert und, gegebenenfalls unter Anwendung von Druck, innerhalb des Temperaturbereichs von 100 bis 200, vorzugsweise 130 bis 180°C unter gleichzeitiger Vernetzung des ursprünglich thermoplastischen Klebstoffs verklebt werden. Gemäß einer bevorzugten Ausführungsform wird die Oberfläche eines Substrats A wie beschrieben beschichtet und anschließend klebstoffseitig mit einem Substrat B, gegebenenfalls unter Anwendung von Druck, kombiniert, wobei dieses Substrat B zumindest an der mit dem Substrat A zu verklebenden Oberfläche eine Temperatur innerhalb des Bereichs von 100 bis 200, vorzugsweise 130 bis 180°C aufweist, Besonders bevorzugt ist diese Art der Herstellung von Verklebungen dazu geeignet, Kunststoffolien, insbesondere PVC-Folien ( = Substrat A) mit Schaumstoffen, vorzugsweise Polyurethan-Hartschaum-Substrat B) zu verbinden, Hierzu wird, entsprechend der bereits geschilderten Arbeitsweise, das Reaktionsgemisch auf eine beispielsweise 1,35 m breite PVC-Folie gesprüht, wobei die PVC-Folie mit einer Geschwindigkeit von ca. 6 m/min. unter dem oszillierden Sprühkopf hinwegbewegt wird. Bei einer Maschinenaustragsleistung von 800 g/min. an Polyurethan bildendem Reationsgemisch entsteht hierbei ein gleichmäßiger Klebstoff-Film von durchschnittlich 100 g/m². Nach dem Aufsprühen passiert die beschichtete PVC-Folie einen kurzen Trockenkanal und ist nach einer Zeitdauer von ca. 3 min., vom Zeitpunkt des Aufsprühens an gerechnet, mit einem grifftrockenen Schmelzklebstoff-Film versehen. Die PVC-Folie kann dann geschnitten und, gegebenenfalls nach Zwischenlagerung, die sich über mehrere Wochen erstrecken kann, weiterverarbeitet werden.

Hierzu kann beispielsweise so vorgegangen werden, daß man die PVC-Folie gespannt in die aufgeklappte Form für ein entsprechendes Formteil einlegt. Auf die Klebstoffseite der PVC-Folie wird anschließend die ca, 180°C-warme Schaumstoffplatte geschichtet, die Form zusammengepreßt und nach ca. 1 min. das mit der PVC-Folie verklebte Formteil entformt.

Durch die erhöhte Temperatur während des Klebevorgangs kommt es in der Klebstoffschicht zu einer exothermen Nachreaktion, die zunächst zu einer Erweichung der Klebstoffschicht und damit zu einer besseren Benetzung der zu verklebenden Teile und schließlich zu einer Vernetzung des Klebstoffs führt, die sich in einer Erhöhung der Glasübergangstemperatur äußert, so daß letztendlich Klebverbunde einer hohen Wärmebeständigkeit erhalten werden.

Das erfindungsgemäße Verfahren ist selbstverständlich nicht auf die Herstellung von Verklebungen von PVC-Folien mit Polyurethan-Hartschaumstoff-Platten beschränkt, sondern eignet sich im Prinzip zur Verklebung beliebiger Substrate, die üblicherweise mit Klebstoffen auf Polyurethan-Basis verklebbar sind, wobei unter "beliebigen Substraten" solche zu verstehen sind, die a) mit Polyurethanklebstoffen grundsätzlich verklebbar sind und die b) gegenüber den zur Anwendung gelangenden erhöhten Temperaturen resistent sind.

Die hier angesprochenen Veränderungen dieser Klebstoffe unter Wärmeeinwirkung, die exotherme Nachreaktion und die Erhöhung der Glasübergangstemperatur nach dem ersten Aufheizen, können, wie in den Beispielen vermerkt ist, mit der Methode der Differential-Scanning Calorimetrie (DSC) überprüft werden. In den nachfolgenden Beispielen beziehen sich alle Angaben in "GT" auf Gewichtsteile.

Beispiel 1

A) Rezeptur:

| | |
|---|---|
| 50 GT | eines Polyesters aus Adipinsäure und Neopentylglykol, OH-Zahl 224, Visk. bei 25°C 6000 mPas |
| 30 GT | eines auf Triethanolamin gestarteten Propylenoxidpolyethers, OH-Zahl 148 |
| 20 GT | Butanooxim |
| 2 GT | Zinn-II-bis-2-ethylhexanoat |
| 102 GT | obige Polyolkomponente, Misch-OH-Zahl 285, Visk. bei 25°C 250 mPas |
| 80 GT | eines Polyphenyl-polymethylen-polyisocyanates (Roh-MDI), NCO-Gehalt 31 Gew.-%, Visk. bei 25°C ca. 130 mPas |

B) Herstellung und Eigenschaften des Schmelzklebstofffilmes:

102 GT der unter 1 A) beschriebenen Polyolkomponente und 80 GT des unter 1 A) beschriebenen Polyisocyanates werden mittels einer 2-Komponenten-Hochdruckkolbenmaschine gemischt und versprüht. Die Dosierung der Komponenten entspricht einem NCO/OH-Äquivalentverhältnis von 1,16. Die Austragsleistung der HK-Maschine wird auf 800 g/min eingeregelt, so daß jeweils pro Minute 448 g der Polyolkomponente und 352 g der Isocyanatkomponente versprüht werden. Die PUR-Komponenten werden auf die Rückseite einer PVC-Dekorfolie, die mit einer Geschwindigkeit von ca. 6 m/min unter dem Mischkopf hindurch bewegt wird, gesprüht und verlaufen zu einer gleichmäßigen Schicht von ca. 100 g/m². Die Klebstoffschicht durchläuft einen kurzen Trockenkanal (80°C) und ist nach insgesamt 3 Minuten Reaktionszeit soweit durchgehärtet, daß die PVC-Bahn geschnitten und gestapelt werden kann. Die beschichtete PVC-Folie kann unmittelbar nach dem eben geschilderten Prozeß oder nach einer Lagerzeit von mehreren Wochen zu einem verklebten Teil weiterverarbeitet werden.

Der Klebstofffilm enthält 11 Gew.-% Butanonoxim. Seine Glasübergangstemperatur, ermittelt mit der Methode der Differential-Scanning-Calorimetrie (DSC), beträgt 30°C. Die weiteren thermoanalytischen Messungen ergeben, daß der Klebstoff beim 1. Aufheizen ab 130°C eine ausgeprägte exotherme Wärmetönung von 41,5 cal/g aufweist. Nach dieser 1. Aufheizung ist die Glasübergangstemperatur auf ca. 100°C angestiegen.

C) Eigenschaften der Verklebung, Haftfestigkeitswerte:

Eine Sandwichplatte (Maße in mm: 170 x 130 x 18), bestehend aus einem verformbaren PUR-Hartschaumstoffkern und Glasvliesstützschichten, wird in einer Heizanlage 3 min bei 190°C erwärmt. Anschließend wird die 190°C warme Platte in Kontakt mit der Schmelzstoffseite (Glasübergangstemperatur = 30°C) der PVC-Dekorfolie gebracht und in einer Form für einen Autohimmel 1 min bei Raumtemperatur verpreßt. Der verklebte Automobilhimmel wird einem Klimawechseltest (95°C 6 h, 42°C 95% rel. Feuchte 200 h, -38°C 8 h) unterworfen. Anschließend wird der Verbund der PVC-Folie zum Trägermaterial überprüft. Sowohl an den Rändern als auch bei extremen Einbuchtungen des Autohimmels wird keine Ablösung der PVC-Folie festgestellt.

Aus dem gealterten Autohimmel werden an verschiedenen Stellen Probekörper geschnitten und aus diesen wird ein 19 mm breiter Abreißstreifen mit einem Vorschub von 100 mm/min bei einem Abreißwinkel von 45°C herausgeschält. Die Haftfestigkeit erweist sich bei sämtlichen Proben als so groß, daß Materialbruch in der PVC-Folie (Flächengewicht 750 g/m²) eintritt.

Beispiel 2

A) Rezeptur:

| | |
|---|---|
| 50 GT | eines Polyesters aus Adipinsäure und Neopentylglykol, OH-Zahl 224, Visk. bei 25°C 6000 mPas |
| 20 GT | eines auf Triethanolamin gestarteten Propylenoxid-Polyethers, OH-Zahl 148 |
| 15 GT | eines auf Ethylendiamin gestarteten Propylenoxid-Polyethers, OH-Zahl 630 |
| 15 GT | Butanonoxim |
| 2 GT | Zinn-II-bis-ethylhexanoat |
| 102 GT | obige Polyolkomponente, Misch-OH-Zahl 330, Visk. bei 25°C 1050 mPas |

90 GT eines Polyphenyl-polymethylen-polyisocyanates (Roh-MDI), NCO-Gehalt 32,5 Gew.-%, Visk. bei 25°C ca. 30 mPas

B) Herstellung und Eigenschaften des Schmelzklebstofffilmes:

Die unter 2 A) beschriebenen PUR-Komponenten werden in dem obigen Gew.-Verhältnis entsprechend Beispiel 1B) auf die Rückseite einer PVC-Bahn gesprüht.

Die Dosierung der Polyol- und Polyisocyanatkomponente entspricht einem NCO/OH-Äquivalentverhältnis von 1,15. Der Klebstofffilm enthält 7,8 Gew.-% an eingebautem Butanonoxim. Seine Glasübergangstemperatur liegt bei 57°C. Beim 1. Aufheizen des Klebstoffes erfolgt oberhalb von 130°C eine exotherme Nachreaktion von 10,7 cal/g. Bei der 2. Aufheizung zeigt sich, daß die Glasübergangstemperatur auf 67°C angestiegen ist.

C) Eigenschaften der Verklebung, Haftfestigkeitswerte:

Die mit dem obigen Schmelzklebstofffilm (Glasübergangstemperatur = 57°C) beschichtete PVC-Folie wird, wie in Beispiel 1 C) bereits erläutert, mit einer warmen PUR-Hartschaumstoffplatte verpreßt. Der Verbund von PVC-Folie zu dem Trägermaterial wird nach dem gleichen, in Beispiel 1 C) beschriebenen Klima-Wechseltest geprüft.

Nach diesem Test kann keine Ablösung der PVC-Dekorfolie vom Träger festgestellt werden. Aus dem gealterten Formteil werden Probekörper entnommen und aus diesen wird ein 19 mm breiter Abreißstreifen mit einem Vorschub von 100 mm/min bei einem Abreißwinkel von 45°C herausgeschält. An den Proben werden Abreißkräfte von 5 - 6 N ermittelt.

Beispiel 3

A) Rezeptur:

| | |
|---|---|
| 102 GT | der Polyolkomponente gemäß Beispiel 2 |
| 90 GT | eines Polyphenyl-polymethylen-polyisocyanates (Roh-MDI), NCO-Gehalt 32,5 Gew.-%, Visk. bei 25°C ca. 50 mPas. |

B) Herstellung und Eigenschaften des Schmelzklebstofffilmes:

Die Verarbeitung der beiden unter 3 A) beschriebenen PUR-Komponenten erfolgt in dem oben angegebenen Gewichtsverhältnis gemäß der in Beispiel 1 beschriebenen Weise.

Das NCO/OH-Verhältnis beträgt 1,15. Der Klebstofffilm enthält 7,8 Gew.-% an eingebautem Butanonoxim. Seine Glasübergangstemperatur liegt bei 48°C. Während des 1. Aufheizens des Klebstoffes erfolgt ab 130°C eine exotherme Nachreaktion von 22,5 cal/g. Nach dieser 1. Aufheizung hat sich die Glasübergangstemperatur bis auf 80°C verschoben.

C) Eigenschaften der Verklebung:

Wie in Beispiel 1 C) beschrieben, wird eine mit obigem Klebstoff (Glasübergangstemperatur = 48°C) beschichtete PVC-Folie zu einem Formteil für die Automobilinnenauskleidung verarbeitet. Dieses Formteil wird in dem ebenfalls in Beispiel 1 beschriebenen Klimatest gealtert. Nach dieser Alterung kann keine Ablösung der PVC-Folie vom Träger festgestellt werden.

Beispiel 4

A) Rezeptur:

| | |
|---|---|
| 40 GT | eines Polyesters aus Adipinsäure und Neopentylglykol, OH-Zahl 224, Visk. bei 25°C 6000 mPas |
| 15 GT | eines Polyesters aus Adipinsäure, Ölsäure und Trimethylolpropan, OH-Zahl 370, Visk. bei 25°C 30 000 mPas |
| 14 GT | eines auf Triethanolamin gestarteten Propylenoxidpolyeterhs, OH-Zahl 148 |
| 20 GT | Butanonoxim |

| | |
|---|---|
| 10,5 GT | eines auf Ethylamin gestarteten, kurzkettigen Ethylenoxidpolyethers, OH-Zahl 766 |
| 0,5 GT | Kaliumacetat |
| 100,0 GT | obige Polyolkomponente, Misch-OH-Zahl 324, Visk. bei 25°C 330 mPas |
| 90 GT | des Polyisocyanates gemäß Beispiel 2 |

B) Herstellung und Eigenschaften des Schmelzklebstofffilms

Die beiden obigen PUR-Komponenten werden entsprechend der in Beispiel 1 gegebenen Beschreibung zu einem Schmelzklebstoffilm auf einer PVC-Dekorfolie verarbeitet. Die Dosierung von Polyisocyanat- und Polyolkomponente entspricht dabei einem NCO/OH-Äquivalentverhältnis von 1,03. An eingebautem Butanonoxim enthält der Schmelzklebstoffilm 10,5 Gew.-%. Die Glasübergangstemperatur des Schmelzklebstoffes liegt bei 25°C. Während des 1. Aufheizens des Klebstoffes erfolgt ab 130°C eine exotherme Nachreaktion von 16,6 cal/g. Nach dieser 1. Aufheizung hat sich die Glasübergangstemperatur bis auf 70,5°C erhöht.

C) Eigenschaften der Verklebung:

Wie in Beispiel 1 C) beschrieben, wird eine mit obigem Klebstoff versehene PVC-Folie zu einem Formteil für die Automobilinnenauskleidung verarbeitet. Dieses Formteil wird dem ebenfalls in Beispiel 1 beschriebenen Klimatest ausgesetzt. Danach kann keine Ablösung der PVC-Folie auch an kritischen Stellen, z.B. dem Randbereich oder extremen Einwölbungen, festgestellt werden. Bei Versuchen, die Folie per Hand abzuziehen, kommt es zum Bruch der PVC-Folie.

**Patentansprüche**

1. Verfahren zur Herstellung von Verklebungen beliebiger Substrate mittels eines Klebstoffes auf Polyurethanbasis, dadurch gekennzeichnet, daß man mindestens eine der miteinander zu verklebenden Substratoberflächen mit einem Polyurethan-Reaktionsgemisch, bestehend aus den Komponenten

   a) flüssigen Gemischen von 2,4'- und 4,4'-Diisocyanatodiphenylmethan, durch partielle Carbodiimidisierung oder Urethanisierung der Isocyanatgruppen verflüssigtes 4,4'-Diisocyanatodiphenylmethan oder bei Raumtemperatur flüssigen Phosgenierungsprodukten von Anilin/Formaldehyd-Kondensaten, die neben 4,4'- und 2,4'- und gegebenenfalls 2,2'-Diisocyanato-diphenylmethan höhere Homologe dieser Diisocyanate enthalten,
und

   b) einer Polyolkomponente, enthaltend

   b1) mindestens eine organische Polyhydroxylverbindung mit einer Hydroxylzahl von 50 - 400,

   b2) mindestens eine, eine Ketoximgruppe aufweisende organische Verbindung in einer Menge von 1 - 30 Gew.-%, bezogen auf das Gesamtgewicht der Komponente b),
und gegebenenfalls

   b3) mindestens eine organische Polyhydroxylverbindung einer über 400 liegenden Hydroxylzahl in einer Menge von 0 - 100 Hydroxyläquivalent-%, bezogen auf die Komponente b1)
wobei

   ein Äquivalentverhältnis der Isocyanatgruppen der Komponente a) zu allen in der Komponente b) vorliegenden, gegenüber Isocyanatgruppen reaktionsfähigen Gruppen von 1:1 - 1,8:1 eingehalten wird,
und gegebenenfalls

   c) aus der Polyurethanchemie und/oder der Klebstofftechnologie üblichen Hilfs- und Zusatzmitteln,

   beschichtet und dann die miteinander zu verklebenden Substratoberflächen bei einer Temperatur innerhalb des Temperaturbereichs von 100 bis 200°C gegebenenfalls unter Anwendung von Druck miteinander in Kontakt bringt.

2. Verfahren gemäß Anspruch 1, dadurch gekennzeichnet, daß man als Komponente b3) Acetonoxim, Butanonoxim, Diethylketoxim, Cyclohexanonoxim, Acetophenonoxim oder Benzophenonoxim verwendet.

3. Verfahren gemäß Anspruch 1 und 2, dadurch gekennzeichnet, daß man vor dem Zusammenbringen der miteinander zu verklebenden Substrate die aus dem Reaktionsgemisch der Komponenten a), b) und gegebenenfalls c) bestehende Beschichtung der Substratoberfläche(n) innerhalb des Temperaturbereichs von 10 - 100°C zu einer thermoplastischen, nicht vernetzten Klebstoffschicht ausreagieren läßt und die Vereinigung der miteinander zu verklebenden Substrate erst im Anschluß hieran, gegebenenfalls nach Zwischenlagerung der mit der thermoplastischen Klebstoffschicht versehenen Substrate vornimmt.

4. Verfahren gemäß Anspruch 1 bis 3, dadurch gekennzeichnet, daß man eine Substratoberfläche A mit dem zu einem Polyurethan ausreagierenden Reaktionsgemisch aus den Komponenten a), b) und gegebenenfalls c) beschichtet, die Beschichtung bei 10 - 100°C zu einem thermoplastischen Polyurethan ausreagieren läßt und anschließend, gegebenenfalls nach Zwischenlagerung des so beschichteten Substrats A dieses klebstoffseitig mit der Oberfläche eines Substrats B, welches zumindest an dieser Oberfläche eine Temperatur von 130 bis 180°C aufweist, gegebenenfalls unter Anwendung von äußerem Druck, vereinigt.

5. Verfahren gemäß Anspruch 4, dadurch gekennzeichnet, daß man als Substrat A eine Kunststoff vorzugsweise PVC-Folie und als Substrat B einen Polyurethanhartschaumstoff, vorzugsweise eine Polyurethan-Hartschaumstoff-Platte, verwendet.

## Claims

1. A process for bonding substrates of any kind using a polyurethane-based adhesive, characterized in that at least one of the substrate surfaces to be bonded to one another is coated with a polyurethane reaction mixture consisting of the components

   a) liquid mixtures of 2,4'- and 4,4'-diisocyanatodiphenyl methane, 4,4'-diisocyanatodiphenyl methane liquefied by partial carbodiimidization or urethanization of the isocyanate groups or phosgenation products of aniline/ formaldehyde condensates which are liquid at room temperature and which, in addition to 4,4'- and 2,4'-and, optionally, 2,2'-diisocyanatodiphenyl methane, contain higher homologs of these diisocyanates
   and
   b) a polyol component containing
   b1) at least one organic polyhydroxyl compound having a hydroxyl value of 50 to 400,
   b2) at least one organic compound containing a ketoxime group in a quantity of 1 to 30% by weight, based on the total weight of component b),
   and, optionally,
   b3) at least one organic polyhydroxyl compound having a hydroxyl value above 400 in a quantity of 0 to 100 hydroxyl equivalent-%, based on component b1),
   an equivalent ratio of 1:1 to 1.8:1 being maintained between the isocyanate groups of component a) and all the isocyanate-reactive groups present in component b),
   and, optionally,
   c) auxiliaries and additives typically used in polyurethane chemistry and/or adhesives technology,
   after which the substrate surfaces to be bonded to one another are brought into contact, optionally under pressure, at a temperature in the range from 100 to 200°C.

2. A process as claimed in claim 1, characterized in that acetone oxime, butanone oxime, diethyl ketoxime, cyclohexanone oxime, acetophenone oxime or benzophenone oxime is used as component b3).

3. A process as claimed in claims 1 and 2, characterized in that, before the substrates to be bonded are brought into contact, the coating of the reaction mixture of components a), b) and, optionally, c) on the substrate surface(s) is allowed to react out at a temperature of 10 to 100°C to form a thermoplastic, uncrosslinked adhesive film and the substrates to be joined are only then brought into contact with one another, optionally after temporary storage of the substrates coated with the thermoplastic adhesive film.

4. A process as claimed in claims 1 to 3, characterized in that a substrate surface A is coated with the polyurethane-forming reaction mixture of components a), b) and, optionally, c), the coating is left to react at 10 to 100°C to form a thermoplastic polyurethane and, optionally after temporary storage, the substrate A thus coated is brought into contact on the adhesive side, optionally under pressure, with the surface of another substrate B which, on this surface at least, has a temperature of 130 to 180°C.

5. A process as claimed in claim 4, characterized in that substrate A is a plastic film, preferably a PVC film, while substrate B is a rigid polyurethane foam, preferably a rigid polyurethane foam sheet.

## Revendications

1. Procédé pour effectuer des collages de substrats quelconques au moyen d'un adhésif à base de polyuréthanne, caractérisé en ce qu'on enduit au moins l'une des surfaces des substrats à assembler par collage d'un mélange réactif pour polyuréthanne, ayant pour composants

   a) des mélanges liquides de 2,4'- et 4,4'-diisocyanatodiphénylméthane, de 4,4'-diisocyanatodiphénylméthane liquéfié par transformation partielle en carbodiimide ou en uréthanne des groupes isocyanato, ou de produits de phosgénation, liquides à la température ambiante, de condensats aniline/formaldéhyde qui contiennent, à côté de 4,4'- et de 2,4'- et le cas échéant de 2,2'-diisocyanatodiphénylméthanes, des homologues supérieurs de ces diisocyanates, et

b) un composant polyol, contenant

b1) au moins un composé polyhydroxylique organique ayant un indice d'hydroxyle de 50 à 400,

b2) au moins un composé organique porteur d'un groupe cétoxime en une quantité de 1 à 30 % en poids par rapport au poids total de composant b), et le cas échéant

b3) au moins un composé polyhydroxylique organique d'indice d'hydroxyle supérieur à 400 en une quantité de 0 à 100 équivalents % d'hydroxyle, par rapport au composant b1),

en maintenant un rapport d'équivalents des groupes isocyanato du composant a) à tous les groupes présents dans le composant b), aptes à réagir vis-à-vis de groupes isocyanato, de 1:1 à 1,8:1, et le cas échéant

c) des substances auxiliaires et des additifs d'emploi classique dans la chimie des polyuréthannes et/ou dans la technologie des adhésifs, après quoi on met en contact l'une avec l'autre les surfaces de substrats à assembler par collage à une température comprise dans la plage de 100 à 200 °C, en appliquant éventuellement une pression.

2. Procédé suivant la revendication 1, caractérisé en ce qu'on utilise comme composant b3) l'acétonoxime, la butanonoxime, la diéthylcétoxime, la cyclohexanonoxime, l'acétophénonoxime ou la benzophénonoxime.

3. Procédé suivant les revendications 1 et 2, caractérisé en ce qu'on fait réagir, avant la réunion des substrats à assembler par collage, le revêtement de la surface ou des surfaces de substrats constitués du mélange réactionnel des composants a), b) et le cas échéant c), dans la plage de températures de 10 à 100 °C pour former une couche adhésive thermoplastique non réticulée et on n'effectue qu'ensuite la réunion des substrats à assembler par collage, le cas échéant après intercalation des substrats munis de la couche adhésive thermoplastique.

4. Procédé suivant les revendications 1 à 3, caractérisé en ce qu'on revêt une surface de substrat A du mélange, réagissant en formant un polyuréthanne, des composants a), b) et le cas échéant c), on fait réagir le revêtement à 10-100 °C pour former un polyuréthanne thermoplastique, après quoi on réunit, le cas échéant après intercalation du substrat A ainsi revêtu, ce substrat côté adhésif avec la surface d'un substrat B qui se trouve, au moins sur cette surface, à une température de 130 à 180 °C, le cas échéant en appliquant une pression extérieure.

5. Procédé suivant la revendication 4, caractérisé en ce qu'on utilise comme substrat A une feuille de matière plastique, de préférence une feuille de polychlorure de vinyle, et comme substrat B une mousse dure de polyuréthanne, de préférence une plaque en mousse dure de polyuréthanne.